# EUROPÄISCHE PATENTANMELDUNG

(11) **EP 2 036 747 A1**
(43) Veröffentlichungstag der Anmeldung: **18.03.2009**
(21) Anmeldenummer: 07116444.6
(22) Anmeldetag: 14.09.2007
(51) Int. Cl.: B60H 1/00

(54) **Heizung für ein Kraftfahrzeug**

(71) Anmelder: Ford Global Technologies, LLC, Dearborn, MI 48126 (US)
(72) Erfinder: Tokal, Aydin, 50126 Bergheim (DE)
(74) Vertreter: Drömer, Hans-Carsten

(57) **Zusammenfassung**

Die Erfindung betrifft eine Heizung für ein Kraftfahrzeug wobei der Wärmetauscher der Heizung vom Kühlmittel einer flüssigkeitsgekühlten Brennkraftmaschine durchströmt wird. Die Heizung verfügt über Mittel, um bei einem Ausfall oder teilweisen Ausfall des Flüssigkeitskühlsystems oder von Teilen des Flüssigkeitskühlsystems der Brennkraftmaschine des KFZ eine Notkühlfunktion sicherzustellen. Gegenstand der Erfindung ist auch ein Verfahren zum Betrieb dieser Notkühlvorrichtung. Die Erfindung betrifft fernen ein Verfahren zum Betrieb einer Kraftfahrzeugheizung, die über eine derartige Notkühlfunktion verfügt. Die Erfindung betrifft außerdem eine elektronische Steuereinheit, die geeignet ist ein derartiges Verfahren durchzuführen sowie ein Kraftfahrzeug enthaltend eine erfindungsgemäße Heizung.

## Beschreibung

Die Erfindung betrifft eine Heizung für ein Kraftfahrzeug wobei der Wärmetauscher der Heizung vom Kühlmittel einer flüssigkeitsgekühlten Brennkraftmaschine durchströmt wird. Die Heizung verfügt über Mittel, um bei einem Ausfall oder teilweisen Ausfall des Flüssigkeitskühlsystems oder von Teilen des Flüssigkeitskühlsystems der Brennkraftmaschine des KFZ eine Notkühleinrichtung sicherzustellen. Gegenstand der Erfindung ist auch ein Verfahren zum Betrieb dieser Notkühlvorrichtung. Die Erfindung betrifft fernen ein Verfahren zum Betrieb einer Kraftfahrzeugheizung, die über eine derartige Notkühleinrichtung verfügt. Die Erfindung betrifft außerdem eine elektronische Steuereinheit, die geeignet ist ein derartiges Verfahren durchzuführen sowie ein Kraftfahrzeug enthaltend eine erfindungsgemäße Heizung.

Heizungen in Kraftfahrzeugen nutzen üblicherweise die Abwärme der das Kraftfahrzeug antreibenden Brennkraftmaschine. Die Abwärme der Brennkraftmaschine wird dabei entweder über eine Flüssigkeitskühlung oder aber auch über eine Luftkühlung abtransportiert. Bei flüssigkeitsgekühlten Brennkraftmaschinen durchströmt die erwärmte Kühlflüssigkeit einen Wärmetauscher. Dieser Wärmtauscher befindet sich üblicherweise in einem Gehäuse, dem Heizungsgehäuse. Üblicherweise ist ebenfalls in diesem Heizungsgehäuse ein Gebläse angeordnet, wobei dieses Gebläse einen Luftstrom erzeugt, der dann den Wärmetauscher durchströmen kann. Der so erhitzte Luftstrom wird dann üblicherweise durch geeignete Mittel aufgeteilt bzw. verteilt und gelangt durch geeignete Ausströmer in den Fahrgastraum des Kraftfahrzeugs.

Die Flüssigkeit zur Kühlung einer flüssigkeitsgekühlten Brennkraftmaschine wird üblicherweise in einem Kreislauf geführt. Dieser Kühlflüssigkeitskreislauf besteht typischerweise aus einem Flüssigkeitskühler, einer Pumpe, einem Thermostaten und einem Kühlerventilator. Der Flüssigkeitskühler ist in der Regel ein Flüssigkeits-/Luft-Wärmetauscher der zur Abfuhr der Wärme vom Fahrtwind eines sich bewegenen Kraftfahrzeugs durchströmt wird. Die Pumpe dient dazu die Kühlflüssigkeit im Kühlkreislauf zirkulieren zu lassen. Üblicherweise ist zur Regelung der Temperatur des Kühlmittels ein Thermostat vorgesehen. Die übliche Betriebestemperatur einer Brennkraftmaschine liegt bei ca. 90°C. Der Thermostat läßt daher nur soviel Kühlmittel zur Abkühlung durch den Kühler strömen wie notwendig ist, um diese Betriebstemperatur näherungsweise stabil zu halten. Bei langsamer Fahrt oder im Stand kann jedoch häufig nicht genug Wärme durch den Kühler abgeführt werden. Hier kommt in der Regel ein Ventilator zum Einsatz, der Luft durch den Kühler drückt oder saugt. Der Ventilator kann permanent betrieben werden z. B. direkt angetrieben von der Brennkraftmaschine, häufig wird er jedoch nach Bedarf zugeschaltet. Häufig wird der Ventilator von einem Elektromotor angetrieben und wird z. B. in Abhängigkeit von der Kühlwassertemperatur mittels eines Temperatursensors ein- bzw. ausgeschaltet.

Betrachtet man die relativ große Zahl an Komponenten eines Flüssigkeitskühlsystems, so ist es vorstellbar, daß eine oder mehrere Komponenten ausfallen können oder nur eingeschränkt arbeiten. Es ist z. B. vorstellbar, daß ein Kühlwasserthermostat nicht oder nicht vollständig öffnet, so daß nicht genug Kühlmittel durch den Kühler strömen kann. Auch kann z. B. der Ventilator ausfallen oder ein oder mehrere Temperatursensoren können ausfallen. Steigt die Kühlwassertemperatur einer Brennkraftmaschine zu sehr an, können Bauteile der Brennkraftmaschine beschädigt werden. Oder ein Teil des Kühlmittels verdampft und die Kühlleistung des Kühlsystems wird dadurch noch mehr herabgesetzt.

Bekannt ist es, bei einem teilweisen Ausfall des Kühlsystems, z. B. bei einem Ausfall des Kühlerventilators, den Wärmetauscher der Heizung zu nutzen, um die Kühlwassertemperatur unterhalb einer kritischen Grenze zu halten. Sinnvollerweise wird das Heizungsgebläse mit höchstmöglicher Leistung betrieben, um dem Heizungswärmetauscher möglichst viel Wärme zu entziehen. Die Heizung arbeitet sozusagen als Notkühleinrichtung oder Notkühlsystem. Da ein Heizungswärmetauscher üblicherweise ca. 8 bis 10 KW Heizleistung bzw. hier Kühlleistung erbringen kann, ist er von der Größenordnung durchaus geeignet, zumindest bei Leerlauf des Motors oder aber bei Betrieb mit nur geringer Last die entstehende Abwärme abzutransportieren. Allerdings bedeutet die Abgabe der maximalen Heizleistung in den Fahrgastraum einen sehr großen Komfortverlust für die Passagiere. Bei z. B. 30°C Außentemperatur können so durchaus über 70°C Ausströmtemperatur aus den Ausströmöffnungen erreicht werden, was eine entsprechende Aufheizung des Fahrgastraums mit sich bringt.

Die DE 10 2005 047 354 offenbart ein Verfahren zur Aufwärmung einer Verbrennungskraftmaschine eines Fahrzeugs vor dem Start, insbesondere eines Kraftfahrzeugs. Es ist vorgesehen, daß der Verbrennungskraftmaschine zur Aufwärmung im Stillstand ein flüssiges Wärmeübertragungsmedium zugeführt wird, das zuvor durch Solarenergie erwärmt worden ist. In der Beschreibung bzw. in einem abhängigen Anspruch wird auch auf eine Notfunktion für den Kühlkreislauf eingegangen. Es wird unter anderem darauf eingegangen, den Heizungskreislauf einer Verbrennungskraftmaschine zur Kühlung der Brennkraftmaschine im Notfall heranzuziehen.

Der Erfindung liegt die daher Aufgabe zugrunde, eine Heizung so zu verbessern, daß sie eine Notkühleinrichtung und damit Notkühlfunktion für das Kühlsystem einer Brennkraftmaschine bereitstellt, ohne den Komfort der Passagiere merklich zu beeinflussen.

Erfindungsgemäß wird diese Aufgabe durch eine Heizung mit den Merkmalen des Anspruchs 1 gelöst.

Danach enthält die Heizung zur Erwärmung eines Fahrgastraum eines Kraftfahrzeugs mindestens ein Gebläse zur Erzeugung eines Luftstroms, mindestens einen Wärmetauscher, der vom Kühlmittel einer flüssigkeitsgekühlten Brennkraftmaschine durchströmt wird, wobei der Luftstrom durch den Wärmetauscher strömt und dabei erhitzt wird oder erhitzt werden kann und wobei mindestens ein Mittel zur Beeinflussung des erhitzten Luftstroms vorgesehen ist, und wobei das mindestens eine Mittel dazu geeignet ist, den erhitzten Luftstrom zumindest teilweise in einen Bereich außerhalb des Fahrgastraumes zu leiten.

Erfindungsgemäß besteht das mindestens eine Mittel zur Beeinflussung des erhitzten Luftstroms z. B. aus einer Klappe, die eine Öffnung im Heizungsgehäuse öffnet bzw. verschließt. Im Normalbetrieb des Kraftfahrzeugs bzw. der Heizung ist diese Klappe geschlossen, so daß die Heizungsluft den Wärmetauscher durchströmen kann, um dann in der Heizung entsprechend den Wünschen der Passagiere verteilt zu werden. Im Notkühlbetrieb wird diese Klappe zumindest teilweise geöffnet, so daß der erhitzte Luftstrom zumindest teilweise in den Bereich außerhalb des Fahrgastraums geleitet wird.

Bevorzugt liegt die Außenwand des Heizungsgehäuses an oder nahe der Außenhaut des Fahrgastraumes, d. h. der Außenhaut der Fahrzeugkarosserie, wobei Fahrzeugkarossen heute üblicherweise aus Blech, vorzugsweise Stahlblech, bestehen. Wird die Klappe nun geöffnet, kann die erhitzte Luft direkt in den Bereich außerhalb des Fahrgastraumes strömen. Die Außenhaut des Fahrgastraumes kann z. B. in diesem Bereich mit Aussparungen versehen sein. So wird das Heizungsgehäuse durch die Außenhaut geschützt, die erhitzte Luft kann jedoch nahezu ungehindert abgeführt werden.

Nicht in jedem Kraftfahrzeug ist es möglich, die Heizung nahe der Außenhaut der Karosserie anzuordnen. Erfindungsgemäß wird daher zusätzlich ein Luftkanal vorgesehen, der die erhitzte Luft aus dem Heizungsgehäuse in den Bereich außerhalb des Fahrgastraumes leitet. Dieser Luftkanal kann zusätzlich mit einer weiteren Klappe verschlossen sein, die ebenfalls nur im Falle des Notkühlbetriebs geöffnet wird.

Die Erfindung betrifft auch ein Verfahren zur Steuerung einer Heizung eines Kraftfahrzeugs bestehend aus folgenden Schritten:
- Detektierung eines Ausfalls mindestens einer Komponente eines Kühlflüssigkeitskreislaufs und/oder
- Messen und/oder Überwachen mindestens einer Grenztemperatur des Kühlflüssigkeitskreislaufs
- Betätigung des mindestens einen ersten Mittels zur Ausleitung eines in der Heizung erhitzten Luftstroms in einen Bereich außerhalb des Fahrgastraums bei Überschreiten der Grenztemperatur und/oder
- Einstellen einer Temperaturregelung der Heizung auf maximale Heizleistung und/oder Erhöhung der Heizungsgebläseleistung.

Wie zuvor beschrieben, läßt sich bei einigen Komponenten eines Kühlsystems ein Ausfall relativ leicht feststellen. So ist z. B. der Ausfall eines Kühlerventilators leicht zu detektieren z. B. unter Zuhilfenahme einer elektronischen Steuerung wie z. B. einer elektronischen Motorsteuerung. Alternativ oder zusätzlich kann die Kühlmitteltemperatur überwacht bzw. gemessen werden. Hier kann z. B. eine maximale obere Grenztemperatur festgelegt werden. In Abhängigkeit von mindestens einer der zuvor genannten Größen, lassen sich Bedingungen festlegen, bei denen das mindestens eine erste Mittel zur Ausleitung eines in der Heizung erhitzten Luftstroms in einen Bereich außerhalb des Fahrgastraums aktiviert wird und/oder das Einstellen einer Temperaturregelung der Heizung auf maximale Heizleistung und/oder die Erhöhung der Heizungsgebläseleistung eingeleitet wird bzw. werden. So kann z. B. der Ausfall eines Kühlerventilators von mehr als fünf Minuten oder die Überschreitung einer Grenztemperatur von z. B. 105°C um z. B. 10°C für mehr als zwei Minuten ein mindestens erstes Mittel zur Ausleitung eines in der Heizung erhitzten Luftstroms in einen Bereich außerhalb des Fahrgastraums aktivieren.

Bevorzugt wird das mindestens eine erste Mittel zur Ausleitung des erhitzten Luftstroms in Abhängigkeit von der Außentemperatur angesteuert. So kann z. B. ein Teil des erhitzten Luftstroms bei kälteren Außentemperaturen dem Fahrgastraum zugeführt werden, anstatt den gesamten Luftstrom in einen Bereich außerhalb des Fahrgastraumes zu leiten. So kann die normale Beheizungsfunktion für die Fahrgäste auch im Notfallbetrieb erhalten bleiben.

Erfindungsgemäß kann außerdem die Leistung der Brennkraftmaschine gedrosselt werden. So können z. B. die von der Brennkraftmaschine an das Kühlsystem abgegebene Wärmemenge mit der von der Heizung maximal abführbaren Wärmemenge in Einklang gebracht werden, so daß die Kühlmitteltemperatur z. B. stabil gehalten werden kann.

Bevorzugt wird weiterhin der Fahrer davon informiert, daß ein Notbetrieb der Kühlanlage vorliegt. Üblicherweise wird bei heutigen Kraftfahrzeugen die Kühlmitteltemperatur angezeigt und bei Überschreiten einer Grenztemperatur erfolgt zusätzlich eine Warnung, z. B. durch ein Lichtsignal. Ein Ausfall eines Kühlerventilators oder eines Kühlmittelthermostaten wird aber nicht angezeigt. Hier kann eine zusätzliche Warnung sehr sinnvoll sein, da ansonsten der Fahrer den Ausfall von Komponenten des Kühlsystems nicht wahrnehmen kann.

Die Erfindung betrifft auch eine elektronische Datenverarbeitungseinheit, die dazu geeignet ist, die zuvor beschriebenen Verfahren auszuführen. Hier bietet sich insbesondere die sowieso schon vorhandene Motorsteuerung an. Viele der benötigten Informationen wie z. B. Kühlmitteltemperatur werden üblicherweise bereits erfaßt, so daß die Implementierung der zuvor beschriebenen Funktionen leicht zu bewerkstelligen ist.

Des Weiteren betrifft die Erfindung Kraftfahrzeuge, die mit einer zuvor beschriebenen Heizung mit Notkühlfunktion ausgerüstet sind.

Die zur Verdeutlichung der Erfindung beigefügten Figuren zeigen:
- Fig. 1: eine teilweise aufgeschnittene schematische Seitenansicht eines Kraftfahrzeugs mit einer einfachen Ausführung der erfindungsgemäßen Heizung.
- Fig. 2: einen vergrößerten Ausschnitt einer Brennkraftmaschinen- und Heizungskonfiguration von Fig. 1
- Fig.3: schematisch einen Schnitt durch eine Ausführungsform der erfindungsgemäßen Heizung.

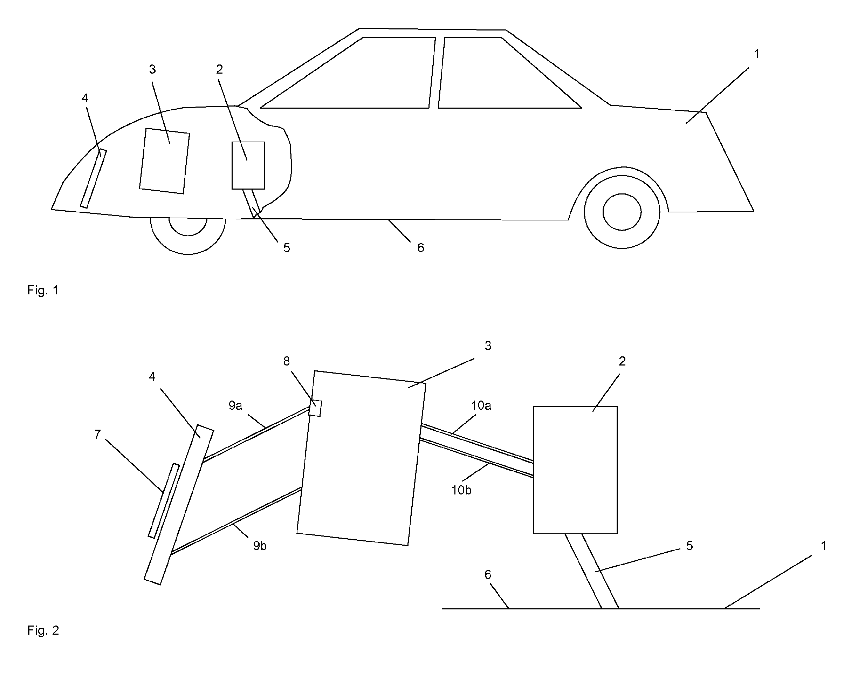

Figur 1 zeigt eine teilweise aufgeschnittene schematische Seitenansicht eines Kraftfahrzeugs 1. Im aufgeschnittenen Teil ist die allgemein übliche Anordnung einer Brennkraftmaschine 3, eines Kühlers 4 sowie einer einfachen Ausführung der erfindungsgemäßen Heizung 2 innerhalb eines Kraftfahrzeuges 1 zu sehen. Dargestellt sind weiterhin ein Kanal 5 zur Ausleitung eines erhitzen Luftstroms in einen Bereich außerhalb des Fahrgastraums und ein Bodenblech 6 des Kraftfahrzeugs 1, wobei hier der erhitzte Luftstrom entsprechend durch das Bodenblech 6, z. B. durch eine Öffnung oder Schlitze im Bodenblech 6, geleitet wird.

In Figur 2 ist ein vergrößerter Ausschnitt der Brennkraftmaschinen- 3 und Heizungskonfiguration 2 des in Figur 1 dargestellten Kraftfahrzeugs 1 dargestellt. Bei Betrieb der Brennkraftmaschine 3 wird Kühlmittel erwärmt. Über einen Thermostaten 8 und eine Kühlmittelleitung 9a gelangt erwärmtes Kühlmittel zum Kühler 4, hier dargestellt als Flüssigkeit/Luft Kühler. Bei Durchströmung des Kühlers 4 wird das Kühlmittel abgekühlt und wird über eine zweite Kühlmittelleitung 9b zur Brennkraftmaschine 3 zurückgeführt. Sollte der Luftstrom durch den Kühler 4 nicht ausreichend sein, sorgt ein Kühlerventilator 7 für zusätzliche Luftzufuhr. Das erwärmte Kühlmittel kann außerdem für Heizzwecke verwendet werden. Dazu wird es durch eine Kühlmittelleitung 10a zu einer Heizung 2 geleitet, um dann abgekühlt durch die Kühlmittelleitung 10b zur Brennkraftmaschine zurück zu strömen. Dargestellt sind weiterhin ein Kanal 5 zur Ausleitung eines erhitzen Luftstroms in einen Bereich außerhalb des Fahrgastraums und das Bodenblech 6 des Kraftfahrzeugs 1.

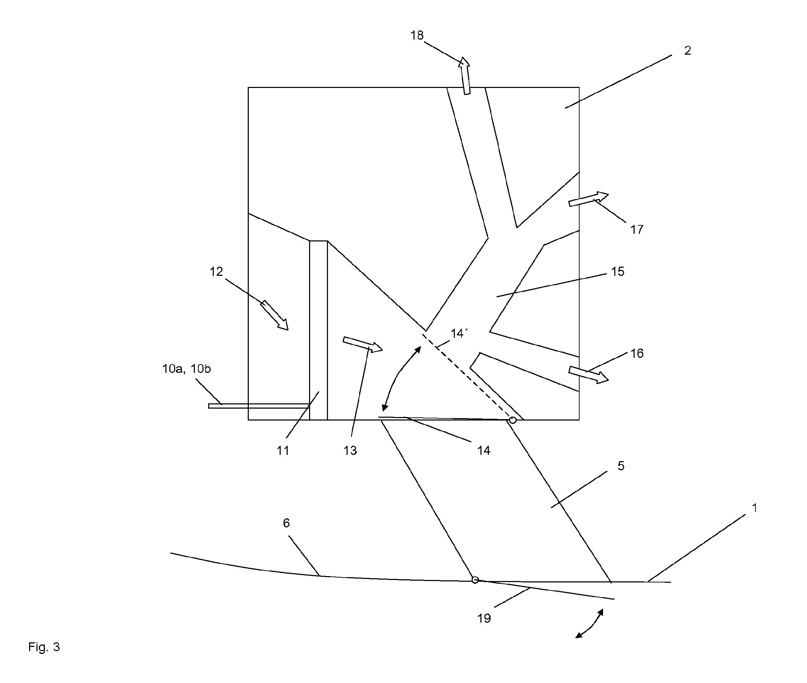

Figur 3 zeigt schematisch einen Schnitt durch die erfindungsgemäße Heizung 2. Von einem nicht dargestellten Gebläse wird die kühle Luft (Pfeil 12) durch einen Wärmetauscher 11 gedrückt, wobei der Wärmetauscher 11 durch die Kühlmittelleitungen 10a, 10b mit erwärmtem Kühlwasser versorgt wird. Die Luft erhitzt sich bei der Durchströmung durch den Wärmetauscher 11 (Pfeil 13) und wird im Normalbetrieb danach durch einen Kanal 15 geleitet, der Anschlüsse für Luftauslässe (Ausströmer) zu einem Fußraum (Pfeil 16), zu einer oder mehreren Mitteldüsen (Pfeil 17) und zu einer oder mehreren Düsen zur Windschutzscheibenentfrostung (Pfeil 18) aufweist. Das erfindungsgemäße mindestens eine Mittel zur Ausleitung des erhitzten Luftstroms ist hier als Klappe 14 ausgebildet. Im Normalbetrieb ist diese Klappe 14 geschlossen. Für den Notfallbetrieb wird die Klappe14 geöffnet, um so den Luftstrom umlenken zu können. Die Klappe kann dabei den gesamten Luftstrom umleiten (Stellung 14') oder auch nur einen Teil des erhitzten Luftstroms, so daß die Heizungsfunktion für den Innenraum erhalten bleibt. Erfindungsgemäß kann dann die erhitze Luft über einen Kanal 5 in einen Bereich außerhalb des Fahrzeugs geleitet werden. Dies ist entweder z. B. durch Schlitze im Bodenblech 6 möglich oder durch eine in das Bodenblech 6 integrierte zusätzliche Klappe 19, die sich nur im Notfallbetrieb öffnet.

### Bezugszeichenliste

- 1: Kraftfahrzeug
- 2: Heizung
- 3: Brennkraftmaschine
- 4: Kühler
- 5: Kanal
- 6: Bodenblech
- 7: Kühlerventilator
- 8: Thermostat
- 9a, b: Kühlmittelleitungen
- 10a, b: Kühlmittelleitungen
- 11: Wärmetauscher
- 12: Strömung kühle Luft
- 13: Strömung erhitzte Luft
- 14: Klappe
- 15: Kanal
- 16: Ausströmer Fußraum
- 17: Ausströmer Mitteldüsen
- 18: Ausströmer Windschutzscheibenentfrostung
- 19: Klappe

## Patentansprüche

1. Heizung (2) zur Erwärmung eines Fahrgastraum eines Kraftfahrzeugs (1) enthaltend mindestens ein Gebläse zur Erzeugung eines Luftstroms, mindestens einen Wärmetauscher (11), der vom Kühlmittel einer flüssigkeitsgekühlten Brennkraftmaschine (3) durchströmt wird, wobei der Luftstrom durch den Wärmetauscher (11) strömt und dabei erhitzt wird oder erhitzt werden kann und wobei mindestens ein erstes Mittel (14) zur Beeinflussung des erhitzten Luftstroms vorgesehen ist
**dadurch gekennzeichnet, daß**
das mindestens eine erste Mittel (14) dazu geeignet ist, den erhitzten Luftstrom zumindest teilweise in einen Bereich außerhalb des Fahrgastraumes zu leiten.

2. Heizung (2) nach Anspruch 1,
**dadurch gekennzeichnet, daß**
das mindestens eine erste Mittel (14) aus mindestens einer Klappe (14) besteht.

3. Heizung (2) nach Anspruch 1 oder 2,
**dadurch gekennzeichnet, daß**
das mindestens eine erste Mittel (14) eine Öffnung in der Außenwand des Heizungsgehäuses (2) freigeben bzw. verschließen kann.

4. Heizung (2) nach Anspruch 2 oder 3,
**dadurch gekennzeichnet, daß**
ein Luftleitkanal (5) zur Abfuhr des erhitzten Luftstroms (13) in den Bereich außerhalb des Fahrgastraums vorgesehen ist.

5. Heizung (2) nach Anspruch 4,
**dadurch gekennzeichnet, daß**
zweite Mittel (19) vorgesehen sind, um den Luftleitkanal (5) an der Mündung in den Bereich außerhalb des Fahrgastraums verschließen bzw. öffnen zu können.

6. Heizung (2) nach Anspruch 5,
**dadurch gekennzeichnet, daß**
die zweiten Mittel (19) aus mindestens einer Klappe (19) bestehen.

7. Verfahren zur Steuerung einer Heizung (2) eines Kraftfahrzeugs (1) nach mindestens einem der vorhergehenden Ansprüche,
**gekennzeichnet, durch die Schritte:**
- Detektierung eines Ausfalls mindestens einer Komponente eines Kühlflüssigkeitskreislaufs und/oder
- Messen und/oder Überwachen mindestens einer Grenztemperatur des Kühlflüssigkeitskreislaufs
- Betätigung des mindestens einen ersten Mittels (14) zur Ausleitung eines in der Heizung erhitzten Luftstroms in einen Bereich außerhalb des Fahrgastraums bei Überschreiten der Grenztemperatur und/oder
- Einstellen einer Temperaturregelung der Heizung (2) auf maximale Heizleistung und/oder
- Erhöhung der Heizungsgebläseleistung.

8. Verfahren nach Anspruch 8,
**dadurch gekennzeichnet, daß**
das mindestens erste Mittel (14) in Abhängigkeit von der Außentemperatur betätigt bzw. angesteuert wird.

9. Verfahren nach Anspruch 8 oder 9,
**dadurch gekennzeichnet, daß**
die Leistung der Brennkraftmaschine (3) gedrosselt wird.

10. Verfahren nach Anspruch 8, 9 oder 10,
**dadurch gekennzeichnet, daß**
eine Warnung des Fahrers erfolgt.

11. Elektronische Datenverarbeitungseinheit,
**dadurch gekennzeichnet, daß**
die elektronische Datenverarbeitungseinheit ein Verfahren nach mindestens einem der Ansprüche 8 bis 11 ausführen kann.

12. Kraftfahrzeug,
**dadurch gekennzeichnet, daß**
das Kraftfahrzeug (1) eine Heizung (2) nach einem der Ansprüche 1 bis 7 enthält.
